# EUROPÄISCHE PATENTSCHRIFT

(11) **EP 2 601 083 B1**
(45) Veröffentlichungstag und Bekanntmachung des Hinweises auf die Patenterteilung: **24.05.2017**
(21) Anmeldenummer: 11733576.0
(22) Anmeldetag: 05.07.2011
(51) Int. Cl.: B60T 1/06, B60T 1/08, B60T 7/02, B60T 7/04, B60T 7/12, B60T 7/22, B60T 8/17, B60T 13/10, B60T 13/12, B60T 13/74, F16D 55/10, F16D 65/10, F16D 65/14, F16D 65/16

(54) **FAHRZEUGBREMSSYSTEM FÜR EIN KRAFTFAHRZEUG UND VERFAHREN ZUM ANSTEUERN DES FAHRZEUGBREMSSYSTEMS BEIM AKTIVIEREN DER FESTSTELLBREMSFUNKTION**
VEHICLE BRAKE SYSTEM FOR A MOTOR VEHICLE AND METHOD FOR CONTROLLING THE VEHICLE BRAKE SYSTEM WHEN THE PARKING BRAKE FUNCTION IS ACTIVATED
SYSTÈME DE FREINAGE POUR UN VÉHICULE AUTOMOBILE ET PROCÉDÉ DE COMMANDE DU SYSTÈME DE FREINAGE DE VÉHICULE LORS DE L'ACTIVATION DE LA FONCTION DU FREIN DE STATIONNEMENT

(30) Priorität: 03.08.2010 DE 102010033253
(43) Veröffentlichungstag der Anmeldung: 12.06.2013
(73) Patentinhaber: Lucas Automotive GmbH, 56070 Koblenz (DE)
(72) Erfinder: POERTZGEN, Gregor, 56068 Koblenz (DE); VERSMOLD, Heiner, 56182 Urbar (DE)
(74) Vertreter: Thum, Bernhard
(86) Internationale Anmeldenummer: PCT/EP2011/003334
(87) Internationale Veröffentlichungsnummer: WO 2012/016616

(56) Entgegenhaltungen:
- WO-A1-2005/073043
- DE-A1- 19 620 344
- DE-A1-102005 042 282
- DE-A1-102007 041 162
- DE-A1-102007 053 278
- DE-C1- 19 732 168
- US-A1- 2005 252 732

## Beschreibung

Die vorliegende Erfindung betrifft ein Fahrzeugbremssystem mit einer hydraulisch ansteuerbaren Scheibenbremseinrichtung, die eine elektromechanische Betätigungseinrichtung zur Aktivierung einer Feststellbremsfunktion aufweist, wobei das Fahrzeugbremssystem einen Hydraulikkreis mit einer Hydraulikdruckquelle sowie ansteuerbaren hydraulischen Funktionselementen aufweist, um nach Maßgabe einer Betriebsbremsaktion eines Fahrers oder einer automatischen Aktivierung eines Fahrassistenzsystems die Scheibenbremseinrichtung hydraulisch anzusteuern, wobei das Fahrzeugbremssystem ferner eine Steuereinrichtung aufweist, um nach Maßgabe einer Feststellbremsaktion des Fahrers oder einer automatischen Aktivierung der Feststellbremsfunktion die elektromechanische Betätigungseinrichtung anzusteuern. Die Erfindung betrifft ferner ein Verfahren zum Ansteuern eines Fahrzeugbremssystems der vorstehend beschriebenen Art.

Fahrzeugbremssysteme sind in vielfältiger Weise aus dem Stand der Technik bekannt. Konkret beschreibt das Dokument DE 10 2005 051 082 A1 ein Fahrzeugbremssystem mit einer Scheibenbremse, die als Schwimmsattel-Scheibenbremse ausgeführt ist. Dabei ist eine Reibbelaganordnung mit zwei gegenüberliegenden Reibbelägen beidseits einer Bremsscheibe vorgesehen. Der eine Bremsbelag ist an einem Schwimmsattel angebracht, wohingegen der andere Bremsbelag sich relativ zum Schwimmsattel über einen Betätigungskolben hydraulisch verlagern lässt. In Folge einer hydraulischen Beaufschlagung eines Betätigungskolbens wird der bewegliche Bremsbelag auf die Bremsscheibe zu verlagert. Der schwimmsattelfeste Bremsbelag wird in an sich bekannter Weise über die Schwimmsattelfunktion von der anderen Seite gegen die Bremsscheibe gezogen, so dass beidseits auf die Bremsscheibe eine Bremskraft einwirkt.

Zusätzlich zu dieser längst bekannten Schwimmsattelfunktion sieht dieser Stand der Technik darüber hinaus aber auch eine elektromechanische Betätigungsvorrichtung vor. Diese wird dazu verwendet, um eine Feststellbremsfunktion zu realisieren. Bei entsprechender Ansteuerung lässt sich neben der hydraulischen Verlagerung die Scheibenbremse auch noch elektromechanisch betätigen. Um die elektromechanischen Komponenten, insbesondere den Elektromotor, nicht allzu groß und leistungsstark dimensionieren zu müssen, kann vorgesehen sein, die Aktivierung der Feststellbremse hydraulisch zu unterstützen. Mit anderen Worten wird die Bremse hydraulisch vorgespannt, der hydraulische Vorspanndruck aufrechterhalten und die Feststellbremse dann über die elektromechanische Betätigungseinrichtung blockiert. Entsprechend aufwändig muss zum Lösen der Feststellbremsfunktion auch eine hydraulische Unterstützung vorgesehen werden.

Ferner sind aus dem Stand der Technik WO 2005/073043 A1 eine entsprechende Scheibenbremseinrichtung und ein Verfahren zum Ansteuern dieser Scheibenbremseinrichtung bekannt, womit unter Verwendung verschiedener Sensoren und unter Einsatz vorbestimmter mathematischer Modelle in Abhängigkeit von der aktuellen Betriebssituation, wie beispielsweise einem Beladungszustand des Fahrzeugs oder einer Hangneigung der Fahrbahn, auch Bremskräfte erzeugt werden können, die wesentlich über den Bremskräften liegen, die allein mit der elektromechanischen Betätigungseinrichtung erzeugt werden können.

Schließlich ist aus dem Dokument DE 10 2007 041 162 A1 ein Feststellbremsmechanismus bekannt, der unter Aufrechterhalten eines vorbestimmten Hydraulikdrucks aktivierbar ist.

Es hat sich aber gezeigt, dass bei einer derartigen Kombination von hydraulischer und elektromechanischer Bremse wegen des hohen Lastkollektivs aus hydraulisch und elektromechanisch erzeugten Zuspannkräften bei der Aktivierung der Feststellbremsfunktion die elektromechanischen Komponenten der elektromechanischen Betätigungseinrichtung entsprechend belastbar ausgelegt werden müssen, um ein Versagen zu vermeiden. Gerade beim späteren Lösen der Feststellbremse ist es dann nämlich erforderlich, die zum Aktivieren der Feststellbremsfunktion hydraulisch und mechanisch erzeugten Zuspannkraft, die während des Bremszustands sozusagen konserviert werden, mit einer entsprechend leistungsstarken Mechanik oder unter hydraulische Unterstützung zu überwinden.

Es ist Aufgabe der vorliegenden Erfindung, eine Scheibenbremseinrichtung der eingangs bezeichneten Art bereitzustellen, bei der unter Ausnutzung eines betriebsbremsungsbedingt anliegenden Hydraulikdrucks das Lastkollektiv beim Aktivieren der Feststellbremsfunktion reduziert werden und das Lösen der Feststellbremsfunktion weniger aufwändig erfolgen kann.

Diese Aufgabe wird durch eine Scheibenbremse der eingangs bezeichneten Art gelöst, bei der vorgesehen ist, dass die Steuereinrichtung dazu ausgebildet ist, wenigstens eines der hydraulischen Funktionselemente derart anzusteuern, dass vor einem Aktivieren der Feststellbremsfunktion durch Ansteuern der elektromechanischen Betätigungseinrichtung ein aktuell die Scheibenbremseinrichtung beaufschlagendes Hydraulikvolumen zum Erzeugen eines eine Betriebsbremsaktion bewirkenden Hydraulikdrucks hydraulisch isolierbar ist, wobei die Scheibenbremseinrichtung derart ausgebildet ist, dass sich das Volumen eines das Hydraulikvolumen aufnehmenden Innenraums in Folge einer Aktivierung der Feststellbremsfunktion vergrößert.

Mit anderen Worten ist erfindungsgemäß vorgesehen, das infolge einer bereits aktivierten Betriebsbremsfunktion auf die Scheibenbremseinrichtung ohnehin einwirkende Hydraulikvolumen zunächst hydraulisch einzusperren, das heißt von der Druckversorgung zu isolieren, so dass der in der Scheibenbremseinrichtung herrschende Hydraulikdruck zu Beginn der Aktivierung der Feststellbremsfunktion aufrechterhalten wird. Sobald aber die elektromechanische Betätigungseinrichtung zur Aktivierung der Feststellbremsfunktion angesteuert wird, das heißt die Scheibenbremseinrichtung elektromechanisch zugespannt wird, vergrößert sich das hydraulische Volumen durch Verlagerung des Betätigungskolbens der Scheibenbremseinrichtung. Dementsprechend sinkt der Hydraulikdruck in der Scheibenbremseinrichtung schnell ab, so dass die hydraulisch aufgebauten Bremskräfte während des elektromechanischen Zuspannens bei Aktivierung der Feststellbremsfunktion abnehmen. Demzufolge werden während der Aktivierung der Feststellbremsfunktion ausgehend von dem betriebsbremsungsbedingt (automatisch oder initiiert vom Fahrer) anliegenden hydraulischen Druck im Wesentlichen elektromechanisch erzeugte Zuspannkräfte wirksam, so dass beim rein elektromechanischen Lösen eine Überbeanspruchung der Bremsanlage oder einzelner Komponenten der Scheibenbremseinrichtungen ausgeschlossen werden können, die aus dem Kollektiv aus hydraulisch und elektromechanisch erzeugten Zuspannkräften resultieren.

Erfindungsgemäß kann vorgesehen sein, dass der Hydraulikkreis eine Mehrzahl von ansteuerbaren Ventilen aufweist, um wahlweise einzelne Scheibenbremseinrichtungen des Fahrzeugbremssystems mit Hydraulikdruck zu beschicken oder hydraulisch zu isolieren. Üblicherweise werden die Ventile im Rahmen einer Betriebsbremsung nach Maßgabe der Vorgaben eines Schlupfregelsystems angesteuert. In diesem Zusammenhang kann erfindungsgemäß vorgesehen sein, dass die Ventile über die Steuereinrichtung derart ansteuerbar sind, dass lediglich diejenigen Scheibenbremseinrichtungen des Fahrzeugbremssystems hydraulisch isolierbar sind, die mit einer mechanischen Betätigungseinrichtung ausgeführt sind. Dies sind in der Regel die Scheibenbremseinrichtungen an den Hinterrädern. Die Erfindung macht es aber auch möglich, selbst an den üblicherweise größer dimensionierten Scheibenbremseinrichtungen der Vorderräder Feststellbremseinrichtungen anzuordnen und diese in geeigneter Weise anzusteuern, ohne dass die Feststellbremseinrichtung jeweils besonders stabil oder leistungsstark ausgeführt sein muss.

Wie vorstehend bereits angedeutet, ist es erfindungsgemäß möglich, dass die Steuereinrichtung mit einer Schlupfregelfunktion ausgebildet ist. Dabei kann vorgesehen sein, dass das Hydraulikvolumen mittels wenigstens eines der Schlupfregelfunktion zugeordneten Ventils isolierbar ist. Bei dem Ventil kann es sich beispielsweise um ein Bremskreis-Absperrventil oder ein ABS-Einlassventil eines Schlupfregelsystems handeln.

Erfindungsgemäß kann ferner vorgesehen sein, dass die Steuereinrichtung vor einem Aktivieren der Feststellbremsfunktion erfasst, ob in Folge einer vom Fahrer oder automatisch initiierten Betriebsbremsaktion ein Hydraulikdruck an der Scheibenbremseinrichtung anliegt. Dies ist unter geringem technischem Aufwand beispielsweise dadurch möglich, dass die Steuereinrichtung das Vorliegen einer Betriebsbremsaktion durch den Fahrer oder eines automatisch von einem Fahrassistenzsystem (z.B. ACC oder Hill-hold mit Bergan- bzw. Bergabfahrhilfe) oder einem Sicherheitssystem (z.B. ESP) ausgelösten Bremsvorgangs anhand verfügbarer Parameter, insbesondere anhand des vorliegenden Schaltungszustands eines Bremslichtschalters, des Hydraulikdrucks in einem Hauptbremszylinder, oder des Pedalwegs eines Bremspedals, erfasst.

Die Erfindung betrifft ferner ein Verfahren zum Ansteuern eines Fahrzeugbremssystem zum Aktivieren einer Feststellbremsfunktion der vorstehend beschriebenen Art, umfassend die folgenden Schritte:
- Erfassen eines Ist-Zustands einer Scheibenbremseneinrichtung,
- Isolieren eines einen Hydraulikdruck in der Scheibenbremseneinrichtung ausübenden Hydraulikvolumens, und
- Aktivieren der elektromechanischen Betätigungseinrichtung zum Spannen der Feststellbremsfunktion.

Bei diesem Verfahren kann erfindungsgemäß vorgesehen sein, dass der Ist-Zustand anhand verfügbarer Parameter, insbesondere anhand des vorliegenden Schaltungszustands eines Bremslichtschalters, des Hydraulikdrucks in einem Hauptbremszylinder, oder des Pedalwegs eines Bremspedals, erfasst wird.

Die Erfindung wird im Folgenden beispielhaft anhand der beiliegenden Figuren erläutert. Es stellen dar:
- Fig. 1: ein Schaltbild eines erfindungsgemäßen Fahrzeugbremssystems, wobei schematisch eine Scheibenbremseinrichtung für ein Vorderrad und eine Scheibenbremseinrichtung für ein Hinterrad gezeigt ist;
- Fig. 2: eine teilweise geschnittene Detailansicht der Scheibenbremseinrichtung für das Hinterrad gemäß Fig. 1 mit entsprechender Feststellbremseinrichtung;
- Fig. 3: den Schaltplan gemäß Fig. 1 im Falle einer Ansteuerung zum Lösen der Feststellbremsfunktion; und
- Fig. 4: ein Diagramm zur Erläuterung der Funktionsweise der Erfindung.

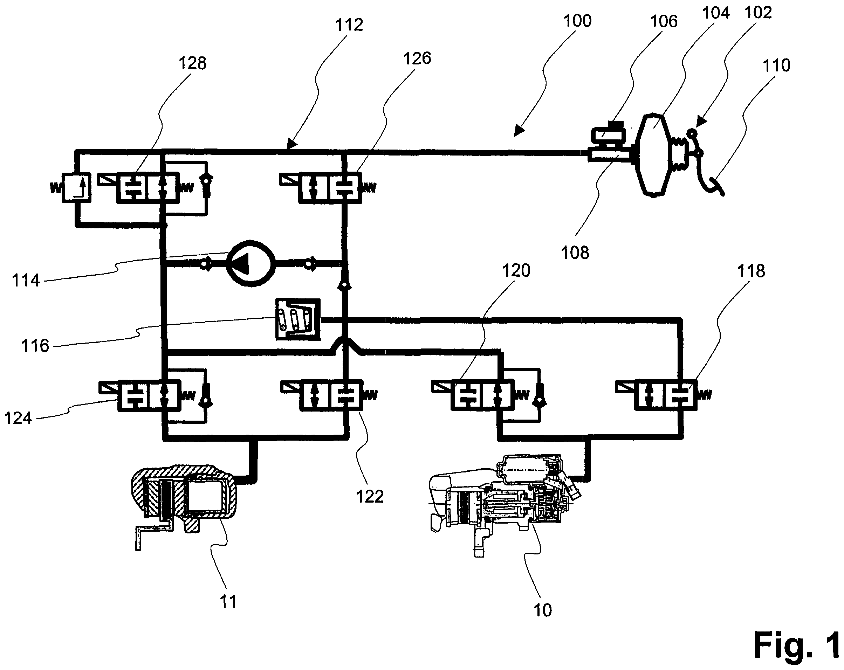

In Fig. 1 ist schematisch ein Schaltplan für ein erfindungsgemäßes Fahrzeugbremssystem 100 gezeigt. Dieses umfasst eine Druckquelle 102, die mit einem Bremskraftverstärker 104, einem Reservoir 106, einem Hauptbremszylinder 108 und einem vom Fahrer betätigbaren Bremspedal 110 ausgebildet ist. Die Druckquelle 102 ist hydraulisch mit einem hydraulischen Bremskreis 112 gekoppelt. Dieser weist eine motorisch ansteuerbare Pumpe 114 auf, sowie einen Druckspeicher 116. Man erkennt ferner zwei Scheibenbremseinrichtungen, nämlich eine Scheibenbremseinrichtung 10 für ein Hinterrad, sowie eine Scheibenbremseinrichtung 11 für ein Vorderrad.

Den Scheibenbremseinrichtungen 10, 11 sind jeweils über eine nicht gezeigte Steuereinrichtung ansteuerbare Ventile 118, 120, 122, 124 zugeordnet. Ferner erkennt man noch Einlassventile 126 und 128, die es ermöglichen, den hydraulischen Bremskreis 112 von der vom Fahrer betätigbaren Druckquelle 102 hydraulisch abzukoppeln.

Hinsichtlich der Betriebsbremsfunktion arbeitet das schematisch gezeigte Fahrzeugbremssystem 100 in an sich bekannter Weise. Die nicht gezeigte Steuereinrichtung bietet ferner eine Schlupfregelfunktion, um Antiblockierregelungen (ABS), Antriebsschlupfregelungen (ASR), Fahrdynamikregelungen (ESP) sowie automatische Bremsungen, z.B. für eine adaptive Geschwindigkeitsregelung (ACC), durchführen zu können.

Im Folgenden wird zum besseren Verständnis im Detail auf den Aufbau der Scheibenbremseinrichtung 10 am Hinterrad eingegangen.

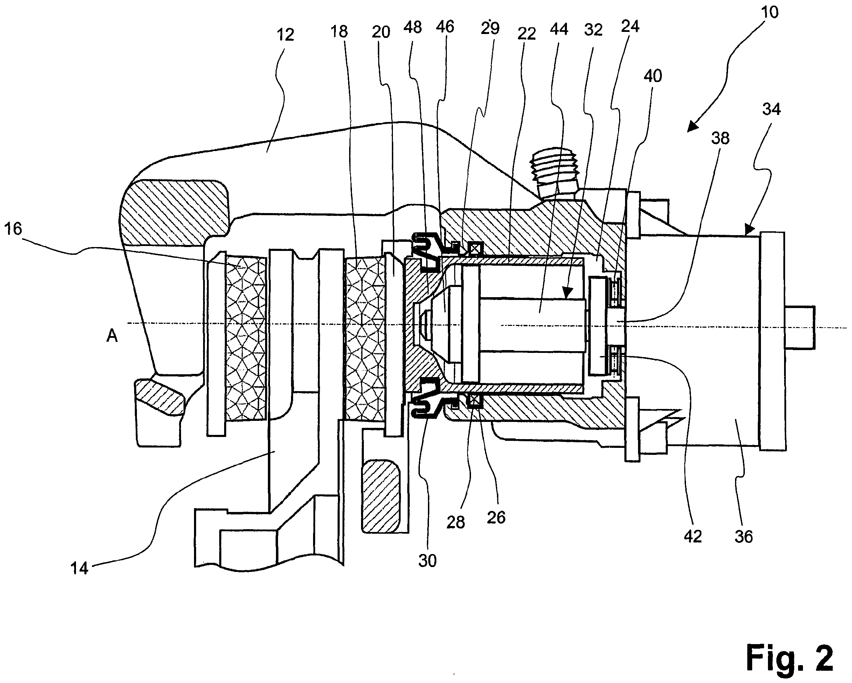

In Fig. 2 ist die erfindungsgemäße Scheibenbremseinrichtung 10 in Teilschnittansicht dargestellt. Diese umfasst einen über einen nicht gezeigten Bremsenträger in üblicher Weise schwimmend gelagerten Bremssattel 12, der eine mit einem Fahrzeugrad drehfest gekoppelte Bremsscheibe 14 überspannt. In dem Bremssattel 12 ist eine Bremsbelaganordnung vorgesehen, die einen am Bremssattel 12 anliegenden Bremsbelag 16 und einen an einem Betätigungskolben 22 anliegenden Bremsbelag 18 aufweist. Die beiden Bremsbeläge 16 und 18 sind einander zugewandt und in der in Fig. 2 gezeigten Lösestellung mit geringem Lüftspiel beidseits der Bremsscheibe 14 angeordnet, so dass keine nennenswerten Restschleifmomente auftreten. Der bewegbare Bremsbelag 18 ist über einen Bremsbelagträger 20 an einem Betätigungskolben 22 zur gemeinsamen Bewegung angeordnet. Der Betätigungskolben 22 ist in einem zylindrischen Hohlraum 24 im Bremssattel 12 verschiebbar gelagert. Im bremsscheibennahen Bereich dieses Hohlraums 24 ist eine umlaufende Aufnahmenut 26 vorgesehen, in der ein ringförmiges Dichtungselement 28 aufgenommen ist.

Man erkennt ferner, dass der Betätigungskolben 22 an seinem in Fig. 2 linken der Bremsscheibe 14 zugewandten Ende mit einem umlaufenden Balg 30 versehen ist, der verhindert, dass Schmutz in den Bereich zwischen dem Betätigungskolben 22 und die den Aufnahmehohlraum 24 des Bremssattels 12 definierende umlaufende Wand eindringen kann.

In Fig. 2 erkennt man ferner, dass der Betätigungskolben 22 hohl ausgebildet ist. In diesem ist ein Druckstück 32 einer elektromechanischen Betätigungsanordnung 34 aufgenommen. Die elektromechanische Betätigungsanordnung 34 umfasst eine Antriebsbaugruppe 36 mit einem Elektromotor und einer Getriebeanordnung. Eine Ausgangswelle 38 dieser Antriebsbaugruppe 36 treibt eine über ein Axiallager 40 abgestützte Antriebsspindel 42 an, die in einer Gewindeaufnahme 44 des Druckstücks 32 gewindemäßig aufgenommen ist.

Das Druckstück 32 weist in seinem in Fig. 2 linken der Bremsscheibe 14 zugewandten Bereich einen konischen Abschnitt 46 auf, der mit einer komplementär konischen Innenoberfläche 48 des Betätigungskolbens 22 in Anlage bringbar ist. In der in Fig. 2 gezeigten Lösestellung besteht ein Spiel zwischen den beiden konischen Flächen 46 und 48.

Wird nun die Bremse vom Fahrer über das Bremspedal oder automatisch über ein Fahrassistenzsystem (z.B. ACC oder Hill-hold mit Bergan- bzw. Bergabfahrhilfe) oder ein Sicherheitssystem (z.B. ESP) hydraulisch betätigt, so wird in dem Hohlraum 24 in an sich bekannter Weise ein Hydraulikdruck aufgebaut, so dass sich der Betätigungskolben 22 entlang der Längsachse A in Fig. 1 nach links verlagert. In der Folge wird mit der Schwimmsattelanordnung in an sich bekannter Weise der Bremsbelag 18 auf die Bremsscheibe 14 gedrückt und dabei der Bremsbelag 16 durch entsprechende Verlagerung des Bremssattels 12 auf der anderen Seite der Bremsscheibe 14 gegen diese gezogen.

Durch die Beaufschlagung des Innenraums 24 mit unter Druck stehendem Hydraulikfluid wird der Betätigungskolben 22 in Fig. 2 entlang der Längsachse A nach links verschoben, so dass es zu einer Bremswirkung kommt. Das radial äußere Dichtelement 28 verformt sich unter dem anliegenden Druck und durch die Bewegung des Betätigungskolbens 22 elastisch in den Bereich einer fasenförmigen Aussparung 29 hinein.

Wird nun beispielsweise durch Freigeben des Bremspedals oder Deaktivierung des Fahrassistenz- bzw. Sicherheitssystems der hydraulische Druck im Innenraum 24 des Bremssattels 12 reduziert, so kann sich das Dichtelement 28 wieder elastisch entspannen und nimmt seine Ausgangsform entsprechend Fig. 2 ein. Dies bedeutet, dass es im Rahmen seiner elastischen Entspannung den Betätigungskolben 22 aus der Betätigungsstellung aufgrund der gegenseitigen Reibanlage wieder zurückzieht und so die Scheibenbremseinrichtung in ihren Ausgangszustand versetzt. Dies entspricht der an sich bekannten Rollback-Funktion, die bei herkömmlichen Bremsen über die Außendichtung 28 am Außenumfang des Betätigungskolbens 22 erzielt wird.

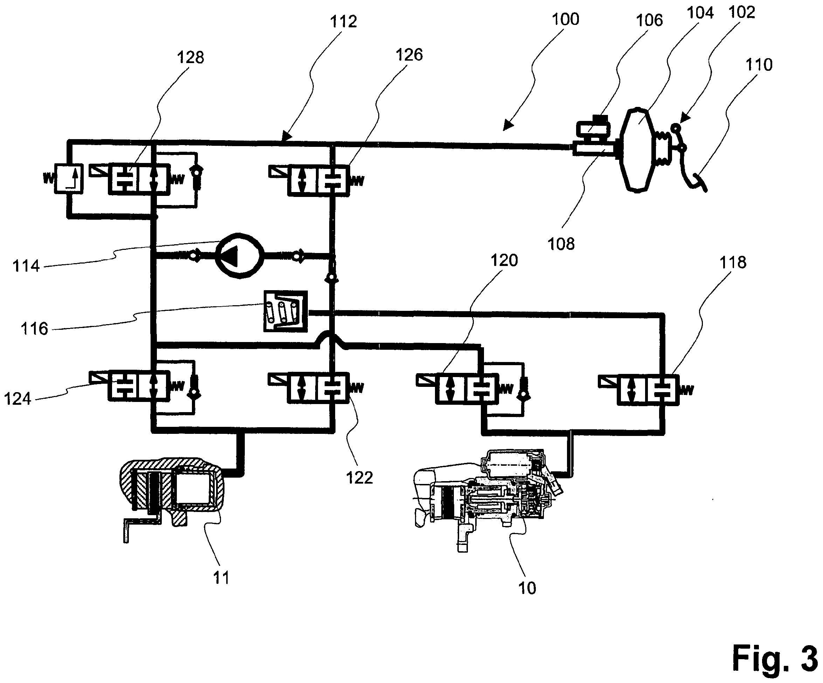

Hinsichtlich einer Aktivierung der Feststellbremsfunktion sind zwei Fälle zu unterscheiden: Sofern kein hydraulischer Druck im Inneren 24 der Scheibenbremseinrichtung 10 anliegt und den Betätigungskolben 22 vorspannt, wird gemäß der Erfindung zur Aktivierung der Feststellbremsfunktion allein die elektromechanische Betätigungseinrichtung 34 angesteuert. Liegt allerdings ein hydraulischer Druck an der Scheibenbremseinrichtung 10 an und spannt den Betätigungskolben 22 vor, beispielsweise weil ein Fahrer vor Aktivierung der Feststellbremsfunktion das Bremspedal niedergedrückt hat oder weil eine automatische Bremsung durchgeführt wurde, so wird das im Innenraum 24 befindliche Hydraulikvolumen durch Schließen des Einlassventils 120 (ABS-Iso), wie in Fig. 3 dargestellt, vom Rest des Bremssystems 100 isoliert, es wird sozusagen eingeschlossen oder eingesperrt. Demnach wird der betriebsbremsungsbedingt herrschende Druckzustand im Innenraum 24 zu Beginn der Aktivierung der Feststellbremsfunktion konserviert.

Sodann wird die elektromechanische Betätigungseinrichtung 24 angesteuert. Unter der Wirkung der elektromechanischen Betätigungseinrichtung 24 verlagert sich das Druckstück 32 nach vorne, bis das Spiel aufgebraucht ist und sich die konische Fläche 46 an die korrespondierende konische Fläche 48 im Inneren des Betätigungskolbens 22 anlegt. Dadurch wird erreicht, dass sich der Betätigungskolben 22 über das Druckstück 32 und das Axiallager 40 am Gehäuse des Bremssattels 12 axial abstützt. Sodann bewegt das Druckstück 32 den Betätigungskolben 22 weiter nach vorne. Dabei nimmt das Volumen des Innenraums 24 zu. Infolge der Volumenzunahme des Innenraums 24 nimmt aber der Hydraulikdruck im Innenraum 24 ab. Dies liegt daran, dass das Hydraulikvolumen - wie vorstehend geschildert - eingeschlossen wurde. Anders als bei herkömmlichen Lösungen, bei denen der Hydraulikdruck auch bei Verlagerung des Betätigungskolbens 22 im Innenraum 24 während Aktivierung der Feststellbremsfunktion auf einem konstanten Niveau gehalten wird, so dass es zu einer Überlagerung von hydraulischer und elektromechanischer Vorspannung kommt, sieht die vorliegende Erfindung also vor, eine solche Überlagerung von hydraulischer und elektromechanischer Vorspannung zu vermeiden. Es ergibt sich also im Wesentlichen kein Lastkollektiv während der Aktivierung der Feststellbremsfunktion, sondern diese erfolgt allein auf Grundlage der elektromechanischen Vorspannung.

Der Feststellbremszustand wird aufgrund der Position des Druckstücks 44 und der Selbsthemmung (beispielsweise durch ein selbsthemmendes Getriebe zwischen Spindel 42 und Aufnahme 44) aufrechterhalten. Die gegen die Bremsscheibe 14 drückenden Bremsbeläge 16, 18 stützen sich über das Druckstück 32 ab.

Soll nun der Feststellbremszustand wieder gelöst werden, so wird wiederum die elektromechanische Betätigungseinrichtung 34 angesteuert. Es erfolgt erfindungsgemäß aus Gründen einer einfachen Ausführung keine hydraulische Unterstützung. Da die Aktivierung der Feststellbremsfunktion und die dabei eingesetzten Spannkräfte allein durch die elektromechanische Betätigungseinrichtung 34 aufgebracht wurden, reicht nun deren Leistungsfähigkeit auch zum Lösen des Feststellbremszustands. Es ist also nicht erforderlich, die Betätigungseinrichtung 34 derart leistungsstark und stabil auszugestalten, dass sie zum Zwecke des Lösens des Feststellbremszustand Lösekräfte aufbringt, die dem Lastkollektiv aus hydraulisch aufgebrachter Spannkraft und elektromechanisch aufgebrachter Spannkraft entsprechen.

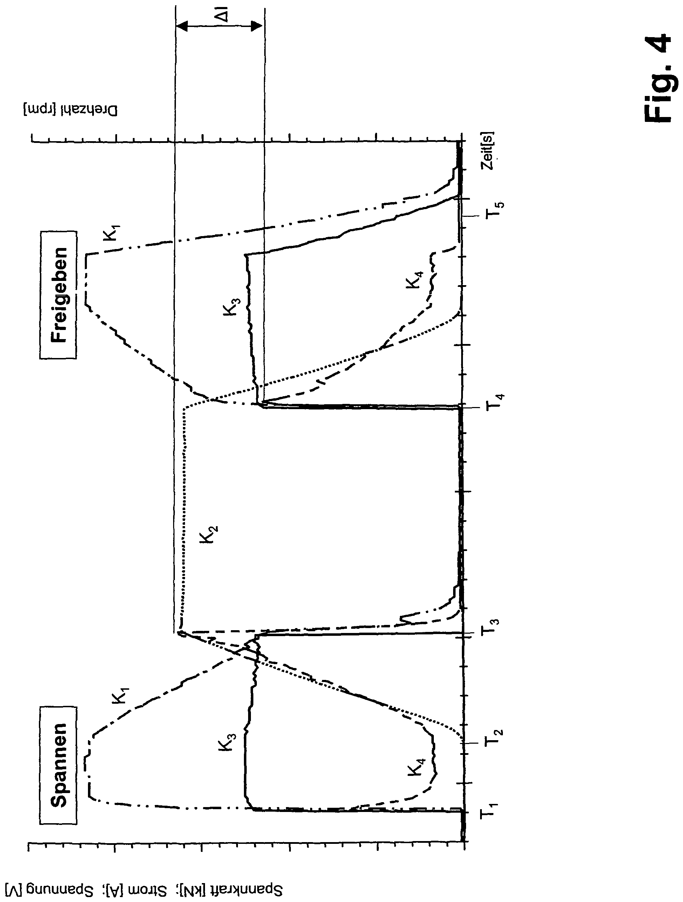

Die Vorteile der Erfindung werden anhand des Diagramms gemäß Fig. 4 erläutert. Darin sind verschiedene Kurven eingezeichnet, die für das Aktivieren (Spannen) und Deaktivieren (Freigegeben) der Feststellbremse zeigen:
- den Verlauf der Drehzahl der elektromechanischen Betätigungseinrichtung 34 in Strich-Punkt-Punkt-Linie K₁;
- den Verlauf der Spannkraft der Scheibenbremseinrichtung 10 in Punktlinie K₂;
- den Verlauf der elektrischen Spannung an der elektromechanischen Betätigungseinrichtung 34 in durchgezogener Linie K₃; und
- den Verlauf der Stromstärke elektromechanischen Betätigungseinrichtung 34 in durchgezogener Linie K₄.

Zum Spannen der Feststellbremse wird zum Zeitpunkt T₁ an den Elektromotor der elektromechanischen Betätigungseinrichtung 34 eine Spannung U (K₃) angelegt. Zunächst kann das Druckstück 32 aufgrund des herrschenden Hydraulikdrucks weit gehend widerstandsfrei bewegt werden, bis es in Anlage mit dem Betätigungskolben 22 gelangt. Zu diesem Zeitpunkt steigt die Stromstärke (K₄) massiv an, und es kommt ab dem Zeitpunkt T₂ zu einem weiteren Zuspannen der Scheibenbremseinrichtung 10. Zum Zeitpunkt T₃ ist die gewünschte Spannkraft (K₂) erreicht. Die Spannungsversorgung (K₃) wird unterbrochen und die Feststellbremse ist gespannt.

Soll die Feststellbremse nun gelöst werden, so wird zum Zeitpunkt T₄ wieder an die elektromechanische Betätigungseinrichtung 34 eine Spannung (K₃) angelegt. Die Stromstärke (K₄) steigt aufgrund des hohen Widerstands der Selbsthemmung elektromechanischen Betätigungseinrichtung 34 sofort stark an, nimmt aber nach Überwindung des Blockierzustandes schnell ab. Zum Zeitpunkt T₅ ist die Feststellbremse vollständig gelöst und die Spannungsversorgung (K₃) wird wieder abgetrennt.

Aufgrund der Tatsache, dass kein konstanter hydraulischer Druck bis zum Ende (Zeitpunkt T₃) des Zuspannvorgangs anlag, ist der beim Lösen der Feststellbremse in der elektromechanischen Betätigungseinrichtung 34 auftretende Maximalbetrag der Stromstärke um den Wert ΔI kleiner als der Maximalbetrag der Stromstärke beim Zuspannen. Dies bedeutet, dass insgesamt die elektromechanische Betätigungseinrichtung 34 weniger leistungsstark ausgelegt werden muss, als dies der Fall wäre, wenn die Aktivierung der Feststellbremse unter permanenter Ausnutzung des Lastkollektivs aus hydraulischer und elektromechanischer Spannkraft erfolgen würde.

## Patentansprüche

1. Fahrzeugbremssystem (100) mit einer hydraulisch ansteuerbaren Scheibenbremseinrichtung (10), die eine elektromechanische Betätigungseinrichtung (34) zur Aktivierung einer Feststellbremsfunktion aufweist, wobei das Fahrzeugbremssystem (100) einen Hydraulikkreis (112) mit einer Hydraulikdruckquelle (102) sowie ansteuerbaren hydraulischen Funktionselementen (114, 118, 120, 122, 124, 126, 128) aufweist, um nach Maßgabe einer Betriebsbremsaktion eines Fahrers oder einer automatischen Aktivierung die Scheibenbremseinrichtung (10) hydraulisch anzusteuern, wobei das Fahrzeugbremssystem (100) ferner eine Steuereinrichtung aufweist, um nach Maßgabe einer Feststellbremsaktion des Fahrers oder einer automatischen Aktivierung der Feststellbremsfunktion die elektromechanische Betätigungseinrichtung (34) anzusteuern,
**dadurch gekennzeichnet, dass** die Steuereinrichtung dazu ausgebildet ist, wenigstens eines der hydraulischen Funktionselemente (120) derart anzusteuern, dass vor einem Aktivieren der Feststellbremsfunktion durch Ansteuern der elektromechanischen Betätigungseinrichtung (34) ein aktuell die Scheibenbremseinrichtung (10) beaufschlagendes Hydraulikvolumen zum Erzeugen eines eine Betriebsbremsaktion bewirkenden Hydraulikdrucks hydraulisch isolierbar ist, wobei die Scheibenbremseinrichtung (10) derart ausgebildet ist, dass sich das Volumen eines das Hydraulikvolumen aufnehmenden Innenraums (24) in Folge einer Aktivierung der Feststellbremsfunktion vergrößert.

2. Fahrzeugbremssystem (100) nach Anspruch 1,
**dadurch gekennzeichnet, dass** der Hydraulikkreis (112) eine Mehrzahl von ansteuerbaren Ventilen (118, 120, 122, 124, 126, 128) aufweist, um wahlweise einzelne Scheibenbremseinrichtungen (10, 11) des Fahrzeugbremssystems (100) mit Hydraulikdruck zu beschicken oder hydraulisch zu isolieren.

3. Fahrzeugbremssystem (100) nach Anspruch 2,
**dadurch gekennzeichnet, dass** die Ventile (118, 120, 122, 124, 126, 128) über die Steuereinrichtung derart ansteuerbar sind, dass lediglich diejenigen Scheibenbremseinrichtungen (10) des Fahrzeugbremssystems (100) hydraulisch isolierbar sind, die mit einer mechanischen Betätigungseinrichtung (34) ausgeführt sind.

4. Fahrzeugbremssystem (100) nach einem der vorangehenden Ansprüche,
**dadurch gekennzeichnet, dass** die Steuereinrichtung mit einer Schlupfregelfunktion ausgebildet ist.

5. Fahrzeugbremssystem (100) nach Anspruch 2 und 4,
**dadurch gekennzeichnet, dass** das Hydraulikvolumen mittels wenigstens eines der Schlupfregelfunktion zugeordneten Ventils isolierbar ist.

6. Fahrzeugbremssystem (100) nach einem der vorangehenden Ansprüche, **dadurch gekennzeichnet, dass** die Steuereinrichtung vor einem Aktivieren der Feststellbremsfunktion erfasst, ob in Folge einer Betriebsbremsaktion durch den Fahrer oder einer automatischen Bremsung ein Hydraulikdruck an der Scheibenbremseinrichtung (10) anliegt.

7. Fahrzeugbremssystem (100) nach Anspruch 6,
**dadurch gekennzeichnet, dass** die Steuereinrichtung das Vorliegen einer Betriebsbremsaktion durch den Fahrer oder einer automatischen Bremsung anhand verfügbarer Parameter erfasst, insbesondere anhand des vorliegenden Schaltungszustands eines Bremslichtschalters, des Hydraulikdrucks in einem Hauptbremszylinder, oder des Pedalwegs eines Bremspedals.

8. Verfahren zum Ansteuern eines Fahrzeugbremssystem zum Aktivieren einer Feststellbremsfunktion nach einem der vorangehenden Ansprüche, umfassend die folgenden Schritte:
- Erfassen eines Ist-Zustands einer Scheibenbremseneinrichtung,
- Isolieren eines einen Hydraulikdruck in der Scheibenbremseneinrichtung ausübenden Hydraulikvolumens, und
- Aktivieren der elektromechanischen Betätigungseinrichtung zum Spannen der Feststellbremsfunktion.

9. Verfahren nach Anspruch 8
**dadurch gekennzeichnet, dass** der Ist-Zustand anhand verfügbarer Parameter erfasst wird, insbesondere anhand des vorliegenden Schaltungszustands eines Bremslichtschalters, des Hydraulikdrucks in einem Hauptbremszylinder, oder des Pedalwegs eines Bremspedals.

## Claims

1. Vehicle brake system with a hydraulically controllable disk brake device, which has an electromechanical actuating device for activating a parking brake function, wherein the vehicle brake system has a hydraulic circuit having a hydraulic pressure source and controllable hydraulic functional elements in order to hydraulically control the disk brake device according to a service brake action of a driver or according to an automatic activation, wherein the vehicle brake system further comprises a control device in order to control the electromechanical actuating device according to a parking brake action of the driver or according to an automatic activation of the parking brake function,
**characterized in that** the control device is designed to control at least one of the hydraulic functional elements in such a way that, before the parking brake function is activated by controlling the electromechanical actuating device, a hydraulic volume currently acting on the disk brake device in order to produce a hydraulic pressure that causes a service brake action can be hydraulically isolated, wherein the disk brake device is configured in such a manner, so that the volume of an internal space receiving the hydraulic volume increases as a result of activating the parking brake function.

2. Vehicle brake system according to claim 1,
wherein the hydraulic circuit comprises a plurality of controllable valves in order selectively to supply hydraulic pressure to, or hydraulically isolate, individual disk brake devices of the vehicle brake system.

3. Vehicle brake system according to claim 2,
wherein the valves are controllable by means of the control device in such a way that only the disk brake devices of the vehicle brake system that are designed with a mechanical actuating device can be hydraulically isolated.

4. Vehicle brake system according to one of the preceding claims,
wherein the control device is configured with a slip regulating function.

5. Vehicle brake system according to claims 2 and 4,
wherein the hydraulic volume can be isolated by means of at least one valve associated with the slip regulating function.

6. Vehicle brake system according to one the preceding claims,
wherein the control device prior to an activation of the parking brake function detects whether as a result of a service brake action by the driver or an automatic braking operation a hydraulic pressure is applied to the disk brake device.

7. Vehicle brake system according to claim 6,
wherein the control device detects the presence of a service brake action by the driver or of an automatic braking operation on the basis of available parameters, in particular on the basis of the current switching state of a brake light switch, the hydraulic pressure in a master cylinder, or the pedal travel of a brake pedal.

8. Method of controlling a vehicle brake system to activate a parking brake function according to one of the preceding claims, comprising the following steps:
- detect an actual state of a disk brake device,
- isolate a hydraulic volume exerting a hydraulic pressure in the disk brake device, and
- activate the electromechanical actuating device to apply the parking brake function.

9. Method according to claim 8,
wherein the actual state is detected on the basis of available parameters, in particular on the basis of the current switching state of a brake light switch, the hydraulic pressure in a master cylinder, or the pedal travel of a brake pedal.

## Revendications

1. Système de freinage pour véhicule automobile (100) pourvu d'un dispositif de freinage à disque (10) pouvant être commandé hydrauliquement et présentant un dispositif d'actionnement électromécanique (34) servant à activer une fonction de freinage de stationnement, le système de freinage pour véhicule automobile (100) présentant un circuit hydraulique (112) pourvu d'une source de pression hydraulique (102) et d'éléments fonctionnels (114, 118, 120, 122, 124, 126, 128) pouvant être commandés par voie hydraulique pour commander hydrauliquement le dispositif de freinage à disque (10) selon une action de freinage de service par le conducteur ou une activation automatique, le système de freinage pour véhicule automobile (100) présentant en outre un dispositif de commande destiné à la commande du dispositif d'actionnement électromécanique (34) selon une action de freinage de stationnement par le conducteur ou une activation automatique de la fonction de freinage de stationnement,
**caractérisé en ce que** le dispositif de commande est conçu pour commander au moins un des éléments fonctionnels hydrauliques (120) de manière que, avant une activation de la fonction de freinage de stationnement par la commande du dispositif d'actionnement électromécanique (34), un volume hydraulique appliqué momentanément sur le dispositif de freinage à disque (10) peut être isolé hydrauliquement pour générer une pression hydraulique provoquant une action de freinage de service, le dispositif de freinage à disque (10) étant conçu de façon que le volume d'un espace intérieur (24) recevant le volume hydraulique augmente à la suite d'une activation de la fonction de freinage de stationnement.

2. Système de freinage pour véhicule automobile (100) selon la revendication 1,
**caractérisé en ce que** le circuit hydraulique (112) présente une pluralité de soupapes (118, 120, 122, 124, 126, 128) destinées à mettre de manière sélective hydrauliquement sous pression ou à isoler hydrauliquement les différents dispositifs de freinage à disque (10, 11) du système de freinage pour véhicule automobile (100).

3. Système de freinage pour véhicule automobile (100) selon la revendication 2,
**caractérisé en ce que** les soupapes (118, 120, 122, 124, 126, 128) peuvent être commandées par le dispositif de commande de façon que seuls les dispositifs de freinage à disque (10) du système de freinage pour véhicule automobile (100) pourvus d'un dispositif d'actionnement mécanique (34) peuvent être hydrauliquement isolés.

4. Système de freinage pour véhicule automobile (100) selon l'une des revendications précédentes,
**caractérisé en ce que** le dispositif de commande est doté d'une fonction de régulation du patinage.

5. Système de freinage pour véhicule automobile (100) selon les revendications 2 et 4,
**caractérisé en ce que** le volume hydraulique peut être isolé au moyen d'au moins une soupape attribuée à la fonction de régulation du patinage.

6. Système de freinage pour véhicule automobile (100) selon l'une des revendications précédentes,
**caractérisé en ce que** le dispositif de commande détecte, avant une activation de la fonction de freinage de stationnement, si une pression hydraulique est présente au dispositif de freinage à disque (10) à la suite d'une action de freinage de service par le conducteur ou à un freinage automatique.

7. Système de freinage pour véhicule automobile (100) selon la revendication 6, **caractérisé en ce que** le dispositif de commande détecte la présence d'une action de freinage de service par le conducteur ou d'un freinage automatique sur la base de paramètres disponibles, plus particulièrement sur la base de l'état de circuit momentané d'un contacteur des feux de frein, de la pression hydraulique dans un maître-cylindre de frein ou de la course d'une pédale de frein.

8. Procédé pour commander un système de freinage pour véhicule automobile pour activer une fonction de freinage de stationnement selon l'une des revendications précédentes, comprenant les étapes suivantes :
- la détection d'un état réel d'un dispositif de freinage à disque,
- l'isolation d'un volume hydraulique exerçant une pression hydraulique dans le dispositif de freinage à disque, et
- l'activation du dispositif d'actionnement électromécanique pour activer la fonction de freinage de stationnement.

9. Procédé selon la revendication 8,
**caractérisé en ce que** l'état réel est détecté sur la base de paramètres disponibles, plus particulièrement sur la base de l'état de circuit momentané d'un contacteur de feux de frein, de la pression hydraulique dans un maître-cylindre de frein ou de la course d'une pédale de frein.
